Europäisches Patentamt

European Patent Office

Office européen des brevets

(19)

(11) EP 0 738 432 B1

(12) FASCICULE DE BREVET EUROPEEN

(45) Date de publication et mention
de la délivrance du brevet:
**11.11.1998 Bulletin 1998/46**

(21) Numéro de dépôt: **95905167.3**

(22) Date de dépôt: **26.12.1994**

(51) Int Cl.$^6$: **H02H 7/045**

(86) Numéro de dépôt international:
**PCT/FR94/01531**

(87) Numéro de publication internationale:
**WO 95/19059 (13.07.1995 Gazette 1995/30)**

(54) **DISPOSITIF DE PROTECTION DIFFERENTIELLE D'UN TRANSFORMATEUR DE PUISSANCE**

DIFFERENTIALSCHUTZEINRICHTUNG FÜR EINEN LEISTUNGSTRANSFORMATOR

DEVICE FOR DIFFERENTIALLY PROTECTING A POWER TRANSFORMER

(84) Etats contractants désignés:
**DE ES GB IT SE**

(30) Priorité: **06.01.1994 FR 9400143**

(43) Date de publication de la demande:
**23.10.1996 Bulletin 1996/43**

(73) Titulaires:
- **SCHNEIDER ELECTRIC SA**
  **92100 Boulogne Billancourt (FR)**
- **ECOLE SUPERIEURE D'ELECTRICITE SUPELEC**
  **F-91192 Gif sur Yvette Cédex (FR)**

(72) Inventeurs:
- **BASTARD, Patrick**
  **F-91190 Gif-sur-Yvette (FR)**
- **REGAL, Hugues**
  **F-91190 Gif-sur-Yvette (FR)**

(74) Mandataire: **Jouvray, Marie-Andrée et al**
**Schneider Electric SA,**
**Sce. Propriété Industrielle**
**38050 Grenoble Cédex 09 (FR)**

(56) Documents cités:
**US-A- 5 014 153**

- **IEEE TRANSACTIONS ON POWER DELIVERY, vol.9, no.1, Janvier 1994 pages 434 - 441 PEREZ ET AL. 'TRAINING AN ARTIFICIAL NEURAL NETWORK TO DISCRIMINATE BETWEEN MAGNETIZING INRUSH AND INTERNAL FAULTS'**
- **IEEE TRANSACTIONS ON POWER DELIVERY, vol.5, no.3, Juillet 1990, NEW YORK, US pages 1299 - 1308, XP147653 MURTY ET AL. 'A KALMAN FILTER BASED DIGITAL PERCENTAGE DIFFERENTIAL AND GROUND FAULT RELAY FOR A 3-PHASE POWER TRANSFORMER'**
- **TENCON '93 IEEE REGION 10 CONFERENCE ON "COMPUTER, COMMUNICATION, CONTROL AND POWER ENGINEERING", vol.2, 19 Octobre 1993, BEIJING pages 754 - 757 TAT-WAI ET AL. 'DETECTION OF MAGNETIZING INRUSH CURRENT USING ARTIFICIAL NEURAL NETWORK'**

## Description

L'invention concerne un dispositif de protection différentielle d'un transformateur de puissance comportant des premiers moyens de mesure pour mesurer le courant circulant dans un enroulement primaire du transformateur, des seconds moyens de mesure pour mesurer le courant circulant dans un enroulement secondaire du transformateur, des moyens d'interruption connectés sur l'enroulement primaire du transformateur pour interrompre l'alimentation électrique du transformateur et un circuit de traitement connecté, aux premiers et seconds moyens de mesure, fournissant un signal de déclenchement aux moyens d'interruption et/ou des signaux d'information à des moyens de signalisation ou de contrôle, le circuit de traitement comportant des moyens d'échantillonnage connectés aux premiers et seconds moyens de mesure pour échantillonner des signaux représentatifs des courants mesurés dans les enroulements primaires et secondaires et des moyens de prétraitement connectés aux moyens d'échantillonnage pour fournir des signaux représentatifs de la composante fondamentale, de la deuxième harmonique et de la cinquième harmonique d'un courant différentiel et un signal représentatif d'un courant de retenue.

Les dispositifs de protection différentielle connus analysent les courants des enroulements primaires et secondaires des transformateurs. Le but des protections différentielles est de détecter un défaut interne entre deux spires quelconques des enroulements du transformateur ou un défaut entre une spire et la masse du transformateur. Les défauts sont détectés par la mesure d'un courant différentiel représentatif de la différence de courant entre le courant circulant dans les enroulements primaires et le courant circulant dans les enroulements secondaires, en tenant compte du rapport de transformation et du couplage. On utilise également un courant de retenue, appelé aussi courant traversant, représentatif d'une valeur moyenne entre les courants circulant dans les enroulements primaires et secondaires, au rapport de transformation et au couplage près.

La protection différentielle utilisée dans des relais de déclenchement provoque la coupure d'une alimentation électrique connectée à l'enroulement primaire du transformateur. Généralement un ordre de déclenchement est produit si des conditions de déclenchement sont vérifiées, par exemple lorsque le courant différentiel est supérieur à un seuil prédéterminé ou lorsqu'il dépasse une fraction du courant de retenue.

Les seules conditions de déclenchement ne suffisent pas à assurer un fonctionnement correct des dispositifs de protection différentielle. Lors de la mise sous tension, notamment, un flux rémanent dans un circuit magnétique du transformateur peut provoquer une saturation du circuit magnétique selon la phase d'enclenchement de la tension d'alimentation et fournir des mesures de courants différentiels transitoires très élevés. En fonctionnement permanent à forts niveaux de tension le circuit magnétique du transformateur peut également se saturer et fausser la mesure du courant différentiel. Dans certains dispositifs, des moyens de mesure des courants primaires et secondaires comportent un circuit magnétique qui sature à forts niveaux de courants et fournissent des mesures erronées.

Des relais électroniques classiques comportant des circuits analogiques ou numériques, permettent d'identifier certains régimes transitoires ou permanents, représentant des évènements autres que des défauts mais générant cependant un courant différentiel dû par exemple à la saturation du circuit magnétique du transformateur ou des capteurs de mesure, afin d'éviter des déclenchements intempestifs. L'article de Murty et al. "A KALMAN FILTER BASED DIGITAL PERCENTAGE DIFFERENTIAL AND GROUND FAULT RELAY FOR A 3-PHASE POWER TRANSFORMER" publié dans IEEE TRANSACTIONS ON POWER DELIVERY, vol. 5, no. 3, juillet 1990 divulgue un dispositif de protection différentielle d'un transformateur de puissance conforme au préambule de la revendication 1. Les moyens de traitement de ce dispositif connu utilisent une logique pour élaborer les signaux fournis par le circuit de pré-traitement. Cependant une prise en compte complète de tous les cas de fonctionnement conduirait à des circuits ou des algorithmes très complexes et coûteux, et/ou à des temps de réponse trop élevés, pour une protection différentielle efficace des transformateurs.

L'article de Chan Tat-Wai et al. "DETECTION OF MAGNETIZING INRUSH CURRENT USING ARTIFICIAL NEURAL NETWORK" publié dans PROCEEDINGS TENCON '93, vol. 2, octobre 1993 divulgue l'utilisation d'un réseau de neurones recevant en entrée des échantillons du courant circulant dans le primaire d'un transformateur (notamment de la fondamentale, de la deuxième et de la troisième harmonique de ce courant) et comportant une sortie logique pour indiquer la présence d'un courant transitoire de magnétisation.

L'invention a pour but un dispositif de protection différentielle pour transformateur rapide et peu coûteux pouvant différencier un nombre important de situations de fonctionnement et de conditions de déclenchement.

Ce but est atteint par le fait que le circuit de traitement comporte un réseau de neurones comportant des entrées connectées aux moyens de prétraitement et au moins une sortie pour fournir les signaux de déclenchement et/ou d'information, le réseau de neurones recevant sur ses entrées les signaux représentatifs de la composante fondamentale, de la deuxième harmonique et de la cinquième harmonique d'un courant différentiel et le signal représentatif d'un courant de retenue fournis par les moyens de prétraitement.

Selon un développement de l'invention les moyens de prétraitement fournissent au réseau de neurones des signaux représentatifs :

-   du rapport entre la composante fondamentale du courant différentiel et la composante fondamentale du courant de retenue,

- du rapport entre la composante fondamentale du courant différentiel et la valeur d'un signal représentatif d'un courant nominal,

- du rapport entre la deuxième harmonique du courant différentiel et la composante fondamentale du courant différentiel,

- du rapport entre la cinquième harmonique du courant différentiel et la composante fondamentale du courant différentiel.

Dans un mode préférentiel de réalisation le réseau de neurones est de type perceptron multicouches comportant trois couches de neurones, quatre entrées par phase de courant à contrôler et une sortie de signal de déclenchement et/ou de signalisation, les quatre entrées étant connectées à une première couche comportant trois neurones, la sortie étant connectée à une troisième couche comportant un neurone, une seconde couche comportant deux neurones étant connectée à la première et à la troisième couche.

Les neurones du réseau de neurones comportent des coefficients calculés pendant un cycle d'apprentissage, les valeurs des signaux appliqués sur les entrées du réseau de neurones étant représentatives de situations de défaut interne, de situations de défaut externe, de situations de fonctionnement normal et de situations de mise sous tension du transformateur.

Selon un mode particulier de réalisation, le réseau de neurones comporte au moins une sortie de signalisation pour signaler la présence d'un défaut interne entre spires d'un enroulement du transformateur, d'un défaut interne entre une spire d'un enroulement et une masse du transformateur et/ou d'un défaut externe.

D'autres avantages et caractéristiques ressortiront plus clairement de la description qui va suivre, de modes particuliers de réalisation de l'invention, donnés à titre d'exemples non limitatifs et représentés aux dessins annexés sur lesquels :

La figure 1 représente un schéma bloc d'un dispositif de protection différentielle de transformateur de type connu.

La figure 2 montre la modélisation d'un défaut dans un transformateur.

La figure 3 représente un dispositif de protection selon un premier mode de réalisation de l'invention, pour un transformateur monophasé.

La figure 4 illustre la méthode d'apprentissage d'un réseau de neurones destiné à être intégré dans le dispositif de la figure 3.

La figure 5 représente un dispositif de protection selon un second mode de réalisation, pour un transformateur triphasé.

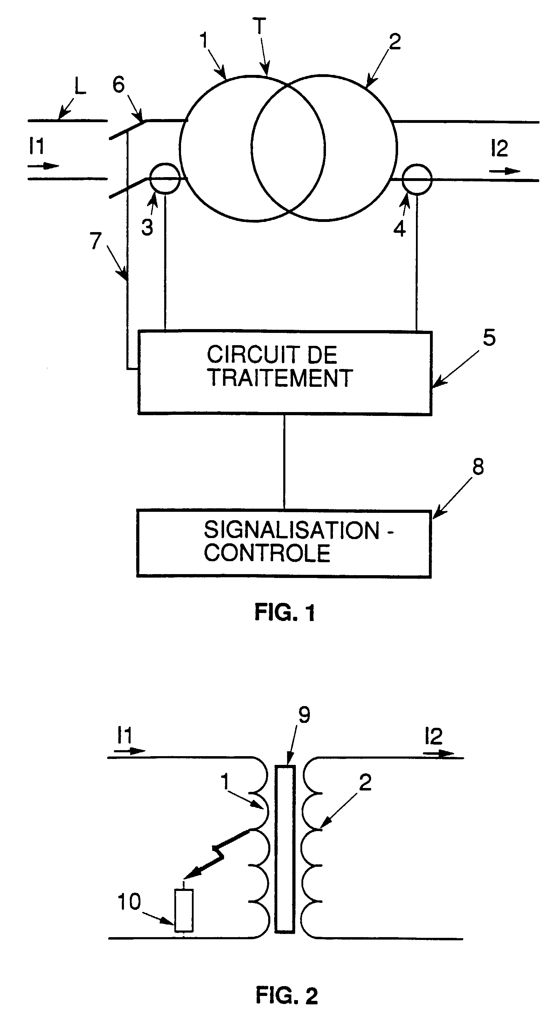

Sur la figure 1 un dispositif de protection différentielle d'un transformateur T comporte un circuit 5 de traitement, un capteur de courant 3 pour mesurer le courant primaire I1 fourni à un enroulement primaire 1 du transformateur par une ligne L d'alimentation électrique, un capteur de courant 4 pour mesurer un courant secondaire I2 sortant d'un enroulement secondaire 2 du transformateur et un dispositif 6 d'interruption de l'alimentation électrique du transformateur. Les deux capteurs de courant 3 et 4 sont connectés à des entrées du circuit de traitement qui fournit un ordre de déclenchement 7 au dispositif 6 d'interruption si certaines conditions de déclenchement sont vérifiées. Le dispositif 6 , connecté entre la ligne d'alimentation L et l'enroulement primaire 1 du transformateur, interrompt par l'ouverture de contacts la circulation du courant dans le transformateur 1. Le circuit de traitement peut aussi être connecté à un circuit 8 de signalisation de défaut.

Les défauts les plus courants détectés par les dispositifs de protection différentielle sont les défauts d'isolement ou de court-circuit entre des spires des enroulements primaires ou secondaires ou entre des spires et des masses du transformateur.

La figure 2 montre un schéma d'un transformateur en défaut. Le courant I1 traverse l'enroulement primaire 1 comportant un nombre de spires N1 et le courant I2 est généré dans l'enroulement secondaire 2 comportant un nombre de spires N2. Les deux enroulements sont bobinés sur un circuit magnétique 9. Sur le schéma un défaut de l'enroulement primaire est modélisé par un court-circuit résistif 10 entre une spire et une extrémité de l'enroulement 1.

La protection différentielle consiste à détecter un courant différentiel Id et à faire déclencher le dispositif si certaines conditions de déclenchement sont vérifiées. L'expression du courant différentiel est :

$$Id = I1 - (N2/N1)I2 \qquad (1)$$

Le courant différentiel est comparé à un courant de retenue Ir appelé aussi courant traversant, l'expression du courant de retenue est :

$$Ir = \frac{1}{2}(I1 + (N2/N1)\ I2) \qquad (2)$$

Selon une des conditions de déclenchement la valeur absolue du courant différentiel |Id| doit être supérieure à une fraction K de la valeur absolue du courant de retenue |Ir|. Pour éviter de détecter des défauts aléatoires à faibles niveaux de courant de retenue, le courant différentiel est également comparé à un seuil Im.

L'expression des conditions de déclenchement est donnée par :

$$|Id| > K\ |Ir|\ et\ |Id| > Im \qquad (3)$$

Les grandeurs des courants |Id| et |Ir| sont traitées de manière à garder seulement la composante fondamentale définie par la fréquence du courant et de la tension de la ligne d'alimentation, par exemple 50 Hz, ou 60 Hz.

Dans des cas particuliers de fonctionnement, la condition de déclenchement 3 n'est pas suffisante pour assurer un fonctionnement correct du dispositif. Lors de la mise sous tension du transformateur, selon la valeur d'un flux rémanent dans le circuit magnétique 9 et la phase d'enclenchement d'une tension dans l'enroulement primaire, le circuit magnétique peut se saturer. Cette saturation entraîne l'apparition d'un courant différentiel transitoire qui peut faire déclencher le dispositif alors qu'il n'y a pas de défaut. Certains dispositifs connus bloquent le déclenchement pendant un temps prédéterminé à la mise sous tension. Cependant cette solution conduit à un retard de traitement dommageable, si le transformateur a un défaut.

En régime établi, un défaut externe peut entraîner une augmentation de la tension et saturer le circuit magnétique. La saturation introduit une mesure fausse du courant différentiel sans défaut interne dans le transformateur. L'augmentation du courant au-delà du courant nominal du transformateur affecte également la linéarité des capteurs 3 et 4 de courant. Les capteurs, généralement constitués par des transformateurs de courant, ont un circuit magnétique qui se sature lorsque le courant à mesurer augmente.

Les divers cas de fonctionnement peuvent être identifiés à l'aide d'une analyse spectrale des courants I1, I2 ou du courant différentiel Id. Cependant, le traitement global de la protection n'est pas facile à obtenir de manière pratique avec des circuits électroniques analogiques ou numériques classiques.

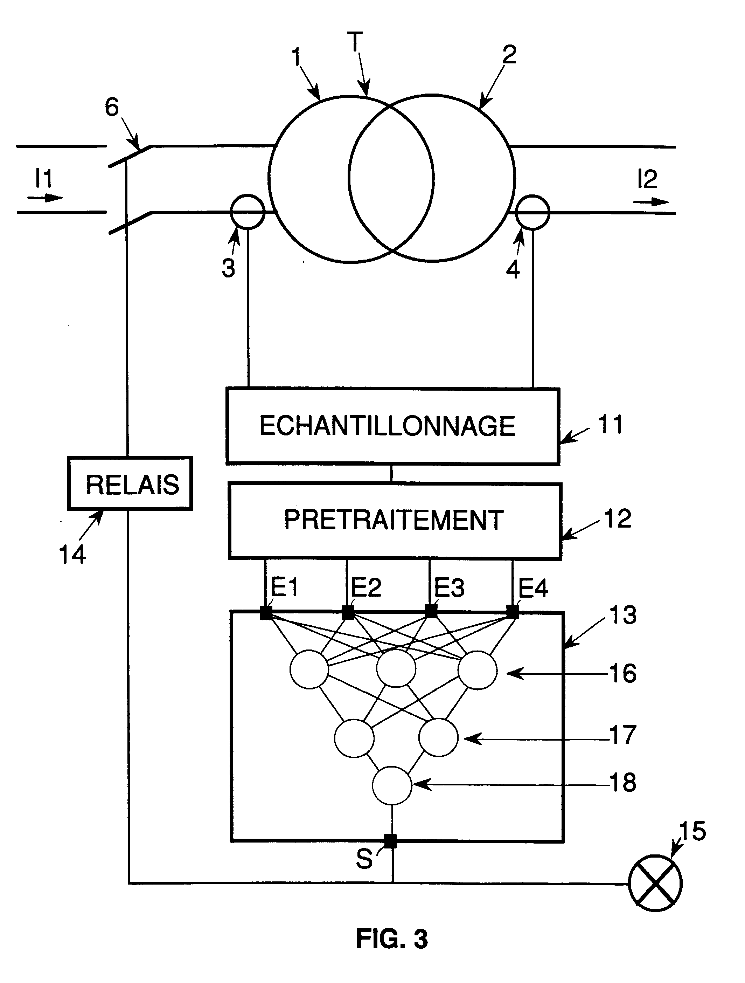

Dans un premier mode de réalisation de l'invention (figure 3), le dispositif de protection comporte un circuit d'échantillonnage 11 connecté aux capteurs 3 et 4 de courant, un circuit de prétraitement 12 connecté au circuit d'échantillonnage 11 et un réseau 13 de neurones comportant quatre entrées E1, E2, E3, E4 connectées au circuit de prétraitement. Une sortie S du réseau de neurones est connectée à un relais 14 qui provoque l'ouverture du dispositif d'interruption 6. La sortie S peut être aussi connectée à un dispositif d'affichage 15. Le circuit d'échantillonnage 11 échantillonne avec une période d'échantillonnage Te, des signaux représentatifs des courants primaires I1 et secondaires I2, et fournit les échantillons au circuit de prétraitement 12. Les échantillons des signaux des courants I1 et I2 sont utilisés pour calculer le courant différentiel Id et le courant de retenue Ir selon les expressions 1 et 2. Le circuit 12 effectue une analyse spectrale des signaux selon une méthode de fenêtre glissante. A chaque période d'échantillonnage Te, un ensemble des derniers échantillons recueillis pendant une période T1 correspondant à la durée de la fenêtre, est utilisé pour l'analyse spectrale. La période T1 est équivalente à la période de la fréquence fondamentale du courant I1 fourni au transformateur par exemple 50 ou 60 Hz. L'analyse spectrale effectuée par le circuit 12 détermine des signaux représentatifs de la composante fondamentale H1D du courant différentiel, de la composante de la seconde harmonique H2D (100 Hz ou 120 Hz) du courant différentiel, de la composante de la cinquième harmonique H5D (250 Hz ou 300 Hz) du courant différentiel et de la composante fondamentale H1R du courant de retenue.

Les signaux peuvent, dans un premier mode de réalisation, être appliqués sur les entrées du réseau de neurones. L'entrée E1 reçoit alors un signal représentatif de HD1, l'entrée E2 un signal représentatif de HD2, l'entrée E3 un signal représentatif de H5D et l'entrée E4 un signal représentatif de H1R.

Cependant, dans d'autres modes de réalisation, un premier calcul élaboré dans le circuit 12 permet de combiner les signaux H1D, H2D, H5D, et H1R de manière à caractériser efficacement les grandeurs des signaux. Dans un mode de réalisation préférentiel, le circuit de prétraitement effectue les combinaisons suivantes :

- Un calcul du rapport de la composante fondamentale H1D du courant différentiel sur la composante fondamentale H1R du courant de retenue

$$H1D/H1R \qquad (4).$$

- Un calcul du rapport de la composante fondamentale H1D du courant différentiel sur un signal représentatif In d'un courant nominal du transformateur

$$H1D/In \qquad (5).$$

- Un calcul du rapport de la seconde harmonique H2D sur la composante fondamentale du courant différentiel

$$H2D/H1D \qquad (6).$$

- Un calcul du rapport de la cinquième harmonique H5D sur la composante fondamentale du courant différentiel

$$H5D/H1D \qquad (7).$$

Le circuit 12 de prétraitement fournit alors sur l'entrée EI un signal représentatif du rapport H1D/H1R, sur l'entrée E2 un signal représentatif du rapport H1D/In, sur l'entrée E3 un signal représentatif du rapport H2D/H1D et sur l'entrée E4 un signal représentatif du rapport H5D/H1D. Le réseau de neurones reçoit les signaux d'entrée et détermine la valeur de la sortie S en fonction de situations apprises lors d'une phase d'apprentissage. En fonctionnement réel le réseau doit différencier des situations saines des situations en défaut devant donner lieu à un déclenchement.

Le réseau de neurones 13 de type perceptron multicouches comporte trois couches de neurones. Une première couche 16 comporte des neurones connectées aux entrées du réseau 13. Une seconde couche 17 constitue une couche interne et une troisième couche 18 est connectée à la sortie. Les neurones de la seconde couche sont connectés aux neurones de la première et de la troisième couche. Dans le mode de réalisation de la figure 3, le réseau 16 comporte trois neurones dans la première couche, deux neurones dans la seconde couche et un neurone dans la troisième couche. Chaque neurone a des coefficients paramétrés lors d'un cycle d'apprentissage où les principales situations de fonctionnement et de défaut sont présentées.

Dans le cas d'une protection différentielle de transformateur, une situation est considérée comme un défaut si elle représente un défaut interne du transformateur. Les autres situations sont considérées comme des situations saines même si des défauts externes peuvent se présenter. La sortie du réseau de neurones est définie pour des valeurs situées entre -1 et 1. Au cours de l'apprentissage les situations saines sont caractérisées par une valeur de sortie aux environs de -0,8 et les situations en défaut par des valeurs voisines de +0,8. En fonctionnement réel, des valeurs positives, de la sortie du réseau de neurones, donnent un ordre de déclenchement.

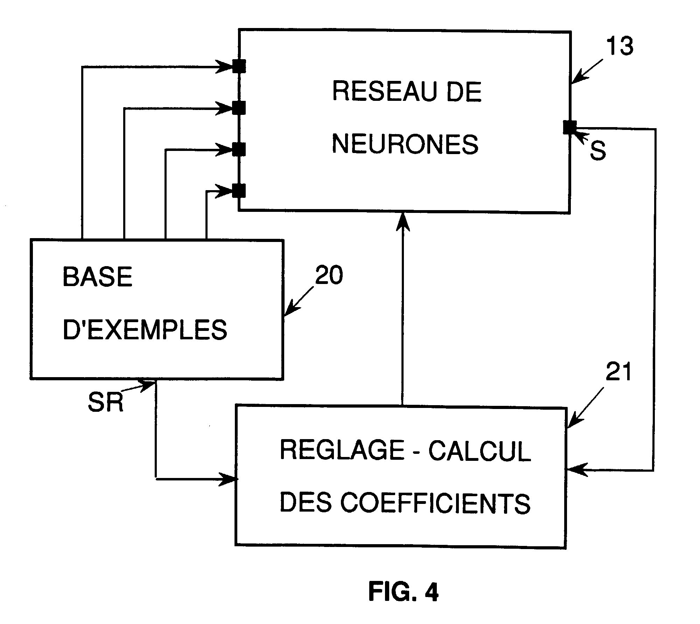

Pendant l'apprentissage du réseau de neurones, des signaux représentatifs du courant de retenue et du courant différentiel, notamment les signaux H1D/H1R, H1D/In, H2D/H1D et H5D/H1D, sont appliqués sur les entrées. Les coefficients des neurones du réseau sont alors modifiés de manière à ce que la valeur de la sortie du réseau soit la plus proche de la valeur d'une sortie de référence correspondant à la situation définie par les valeurs des signaux d'entrée. L'apprentissage se fait à partir de plusieurs cas de fonctionnement et de défaut présentés plusieurs fois. La figure 4 montre un apprentissage automatisé d'un réseau 13 de neurones pouvant être utilisé dans le dispositif de protection différentielle de la figure 3. Une base d'exemples 20 comporte toutes les situations que le réseau 13 doit apprendre. Pour chaque situation, la base comporte les valeurs des quatre signaux appliqués aux entrées et la valeur d'une sortie SR de référence correspondante. La sortie S du réseau de neurones et la sortie SR de référence de la base d'exemples sont reliées à un dispositif 21 de réglage des coefficients des neurones. Le dispositif 21 compare les deux sorties et paramètre les coefficients de manière à obtenir une valeur de la sortie S du réseau la plus proche possible de la valeur de la sortie de référence SR. Les situations de la base d'exemples sont utilisées séquentiellement et/ou simultanément pour l'apprentissage du réseau de neurones.

La base d'exemples 20 comporte environ mille exemples de situations différentes. Ces situations peuvent être répertoriées en plusieurs classes, par exemple :

- le fonctionnement normal, à vide ou en charge,
- la mise sous tension du transformateur,
- défaut extérieur,
- défaut interne entre spires,
- défaut interne entre une spire et une masse.

Les exemples sont choisis de manière à ce que le réseau de neurones puisse détecter une situation en défaut dans un délai maximum de 20 ms après l'apparition d'un défaut.

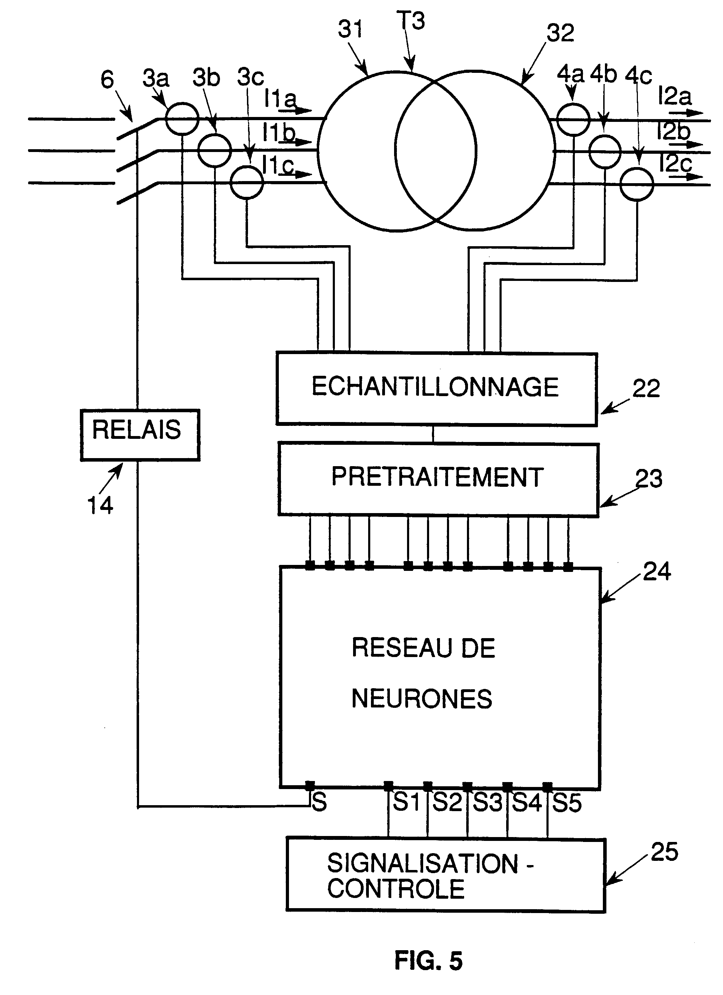

Le mode de réalisation de la figure 3, donné à titre d'exemple, est utilisé avec un transformateur T monophasé ou avec les enroulements d'une phase d'un transformateur polyphasé. Dans un autre mode de réalisation, représenté sur la figure 5, un dispositif de protection différentielle est utilisé pour un transformateur triphasé T3. Trois capteurs 3a, 3b, 3c de courant mesurent des courants primaires I1a, I1b, I1c de trois phases a, b et c alimentant l'enroulement 31 primaire triphasé. Trois capteurs 4a, 4b, 4c mesurent des courants I2a, I2b, I2c sortant d'un enroulement 32 secondaire triphasé. Les capteurs de courant sont connectés à un circuit 22 d'échantillonnage. Une sortie du circuit 22 est connectée à un circuit 23 de prétraitement qui effectue une analyse spectrale et calcule les courant différentiels et les courants de retenue. Un réseau de neurones 24 comporte des entrées connectées au circuit 23, une sortie S connectée à un relais 14 de déclenchement et des sorties auxiliaires S1, S2, S3, S4, S5 connectées à un circuit 25 de signalisation.

Le circuit de prétraitement 23 peut élaborer les mêmes signaux que le circuit 12 de la figure 3 pour chacune des trois phases du transformateur T3 ou effectuer d'autres combinaisons des signaux représentatifs des composantes fondamentales ou harmoniques des courants différentiels ou de retenue. De la même manière le réseau de neurones 24 peut comporter trois répliques du réseau 13 en parallèle ou comporter une organisation globale différente tenant compte de l'ensemble des signaux des entrées. Dans le mode de réalisation de la figure 5, le réseau 24 fournit sur ses sorties auxiliaires S1 à S5 des informations sur la présence et la nature d'un défaut détecté pour chacune des phases du transformateur. Le circuit 25 de signalisation signale séparément alors les situations détectées par le réseau de neurones par exemple les situations de défaut suivantes :

- défaut entre spires au primaire, phase a, b et/ou c,
- défaut entre spires au secondaire, phase a, b et/ou c,
- défaut entre une spire et une masse au primaire, phase a, b et/ou c,
- défaut entre une spire et une masse au secondaire, phase a, b et/ou c,

ou les situations saines :

- mise sous tension,
- fonctionnement normal,
- défaut externe, phase a, b et/ou c.

Le dispositif de protection différentielle décrit ci-dessus peut s'appliquer à tout type de transformateur électrique quels que soient les tensions et les courants primaires ou secondaires ainsi que le couplage des enroulements primaires ou secondaires. Dans les réseaux maillés les dispositifs de coupure d'alimentation peuvent être aussi bien raccordés aux enroulements primaires et aux enroulements secondaires du transformateur.

Les circuits de prétraitement 12 et 23 élaborent, dans les modes de réalisation ci-dessus, des signaux représentatifs du courant de retenue et de la composante fondamentale, de l'harmonique 2 et de l'harmonique 5 du courant différentiel, mais d'autres signaux peuvent également être utilisés pour compléter la protection différentielle.

Les situations identifiées par les réseaux de neurones 13 et 24 ne sont pas limitées à celles citées ci-dessus, elles peuvent être adaptées à des usages particuliers selon le transformateur utilisé.

Les capteurs utilisés par les dispositifs ci-dessus sont des capteurs de courant uniquement, mais il est également possible d'ajouter d'autres capteurs pour affiner la protection. Par exemple les dispositifs peuvent être complétés en ajoutant des capteurs pour mesurer les tensions primaires et secondaires ou des capteurs de mesure de température de pression ou de dégagement gazeux à l'intérieur du transformateur.

La mise en oeuvre du dispositif de protection différentielle peut être faite de manière indépendante comme dans les modes de réalisation décrits ci-dessus ou être intégrée et associée à d'autres types de protection comme par exemple la protection en surcharge ou de court-circuit externe.

**Revendications**

1. Dispositif de protection différentielle d'un transformateur de puissance comportant des premiers moyens (3; 3a, 3b, 3c) de mesure pour mesurer le courant (I1; I1a, I1b, I1c) circulant dans un enroulement (1; 31) primaire du transformateur (T; T3), des seconds moyens (4; 4a, 4b, 4c) de mesure pour mesurer le courant (I2; I2a, I2b, I2c) circulant dans un enroulement (2; 32) secondaire du transformateur (T; T3), des moyens (6, 14) d'interruption connectés sur l'enroulement primaire du transformateur pour interrompre l'alimentation électrique du transformateur et un circuit (11, 12, 13; 22, 23, 24) de traitement connecté, aux premiers et seconds moyens de mesure, fournissant un signal (S) de déclenchement aux moyens d'interruption (6, 14) et/ ou des signaux d'information à des moyens de signalisation ou de contrôle (15; 25), le circuit de traitement comportant des moyens d'échantillonnage (11; 22) connectés aux premiers et seconds moyens de mesure pour échantillonner des signaux représentatifs des courants mesurés dans les enroulements primaires et secondaires et des moyens (12; 23) de prétraitement connectés aux moyens d'échantillonage (11; 22) pour fournir des signaux représentatifs de la composante fondamentale (H1D), de la deuxième harmonique (H2D) et de la cinquième harmonique (H5D) d'un courant différentiel et un signal (H1R) représentatif d'un courant de retenue,

dispositif caractérisé en ce que le circuit de traitement comporte un réseau (13; 24) de neurones comportant des entrées connectées aux moyens de prétraitement et au moins une sortie (S) pour fournir les signaux de déclenchement et/ou d'information, le réseau de neurones recevant sur ses entrées les signaux représentatifs de la composante fondamentale (H1D), de la deuxième harmonique (H2D) et de la cinquième harmonique (H5D) d'un courant différentiel et le signal (H1R) représentatif d'un courant de retenue fournis par les moyens de prétraitement.

2. Dispositif de protection selon la revendication 1 caractérisé en ce que les moyens de prétraitement fournissent au réseau de neurones des signaux représentatifs :

- du rapport (H1D/H1R) entre la composante fondamentale du courant différentiel et la composante fondamentale du courant de retenue,
- du rapport (H1D/In) entre la composante fondamentale du courant différentiel et la valeur d'un signal représentatif d'un courant nominal (In),
- du rapport (H2D/H1D) entre la deuxième harmonique du courant différentiel et la composante fondamentale du courant différentiel,
- du rapport (H5D/H1D) entre la cinquième harmonique du courant différentiel et la composante fondamentale du courant différentiel.

3. Dispositif de protection selon l'une des revendications 1 et 2 caractérisé en ce que le réseau de neurones est de type perceptron comportant trois couches de neurones, quatre entrées (E1, E2, E3, E4) par phase de courant à contrôler et une sortie (S) de signal de déclenchement et/ou de signalisation, les quatre entrées étant connectées à une première couche (16) comportant trois neurones, la sortie étant connectée à une troisième couche (18) comportant un neurone, une seconde couche (17) comportant deux neurones étant connectée à la première et à la troisième couche.

4. Dispositif de protection selon l'une quelconque des revendications 1 à 3 caractérisé en ce que les neurones du réseau de neurones comportent des coefficients calculés pendant un cycle d'apprentissage, les valeurs des signaux appliqués sur les entrées du réseau de neurones étant représentatives de situations de défaut interne, de situations de défaut externe, de situations de fonctionnement normal et de situations de mise sous tension du transformateur.

5. Dispositif de protection selon l'une quelconque des revendications 1 à 4 caractérisé en ce que le réseau de neurones comporte au moins une sortie de signalisation pour signaler la présence d'un défaut interne entre spires d'un enroulement du transformateur, d'un défaut interne entre une spire d'un enroulement et une masse du transformateur et/ou d'un défaut externe.

**Patentansprüche**

1. Differenzstrom-Schutzeinrichtung eines Leistungstransformators mit ersten Meßmitteln (3; 3a, 3b, 3c) zur Messung eines über eine Primärwicklung (1; 31) des Transformators (T; T3) fließenden Stroms (I1, I1a, I1b, I1c), zweiten Meßmitteln (4; 4a, 4b, 4c) zur Messung des über eine Sekundärwicklung (2; 32) des Transformators (T; T3) fließenden Stroms (I2, I2a, I2b, I2c), an die Primärwicklung des Transformators angeschlossenen Unterbrechungsmitteln (6, 14) zur Unterbrechung der Einspeisung des Transformators sowie einer, an die ersten und zweiten Meßmittel angeschlossenen Verarbeitungsschaltung (11, 12, 13; 22, 23, 24), die ein Auslösesignal (S) an die Unterbrechungsmittel (6, 14) und/oder Informationssignale an Anzeige- bzw. Kontrollmittel (15; 25) liefert, wobei die Verarbeitungsschaltung an die ersten und zweiten Meßmittel angeschlossene Abtastmittel (11; 22) zur Abtastung von Signalen, welche die in der Primärwicklung und Sekundärwicklung gemessenen Ströme abbilden, sowie an die Abtastmittel (11; 22) angeschlossene Vorverarbeitungsmittel (12; 23) zur Lieferung von, die Grundschwingung (H1D), die zweite Harmonische (H2D) und die fünfte Harmonische (H5D) eines Differenzstroms abbildenden Signalen sowie eines, den Durchgangsstrom abbildenden Signals (H1R) umfaßt, dadurch gekennzeichnet, daß die Verarbeitungsschaltung ein neuronales Netz (13; 24) mit an die Vorverarbeitungsmittel angeschlossenen Eingängen und mindestens einem Ausgang (S) zur Lieferung der Auslöse- und/oder Informationssignale umfaßt, wobei die Eingänge des neuronalen Netzes mit den von den Vorverarbeitungsmitteln gelieferten Signalen beaufschlagt werden, die die Grundschwingung (H1D), die zweite Harmonische (H2D) und die fünfte Harmonische (H5D) eines Differenzstroms sowie den Durchgangsstrom (H1R) abbilden.

2. Schutzeinrichtung nach Anspruch 1, dadurch gekennzeichnet, daß die Vorverarbeitungsmittel Signale an das neuronale Netz liefern, die

   - das Verhältnis (H1D/H1R) zwischen der Grundschwingung des Differenzstroms und der Grundschwingung des Durchgangsstroms,

   - das Verhältnis (H1D/In) zwischen der Grundschwingung des Differenzstroms und dem Wert eines, einen Nennstrom (In) abbildenden Signals,

   - das Verhältnis (H2D/H1D) zwischen der zweiten Harmonischen des Differenzstroms und der Grundschwingung des Differenzstroms sowie

   - das Verhältnis (H5D/H1D) zwischen der fünften Harmonischen des Differenzstroms und der Grundschwingung des Differenzstroms abbilden.

3. Schutzeinrichtung nach einem der Ansprüche 1 und 2, dadurch gekennzeichnet, daß das neuronale Netz als Multilayer-Perceptron mit drei Neuronenschichten, vier Eingängen (E1, E2, E3, E4) pro zu überwachender Stromphase und einem Ausgang (S) für das Auslöse- und/oder Anzeigesignal ausgebildet ist, wobei die vier Eingänge an eine erste Schicht (16) mit drei Neuronen und der Ausgang an eine dritte Schicht (18) mit einem Neuron angeschlossen sind und eine zweite Schicht (17) mit zwei Neuronen an die erste und die dritte Schicht angeschlossen ist.

4. Schutzeinrichtung nach irgendeinem der Ansprüche 1 bis 3, dadurch gekennzeichnet, daß die Neuronen des neuronalen Netzes während einer Lernphase errechnete Koeffizienten enthalten, wobei die Werte der die Eingänge des neuronales Netzes beaufschlagenden Signale interne Fehlersituationen, externe Fehlersituationen, Normalbetriebssituationen sowie Spannungsaufschaltungsituationen des Transformators abbilden.

5. Schutzeinrichtung nach irgendeinem der Ansprüche 1 bis 4, dadurch gekennzeichnet, daß das neuronale Netz mindestens einen Anzeigeausgang zur Anzeige eines internen Fehlers zwischen einzelnen Windungen einer Wicklung des Transformators, eines internen Fehlers zwischen einer Windung einer Wicklung und Masse des Transformators und/oder eines externen Fehlers umfaßt.

## Claims

1. A protective device for differential protection of a power transformer comprising first measuring means (3; 3a, 3b, 3c) for measuring the current (I1; I1a, I1b, I1c) flowing in a primary winding (1; 31) of the transformer (T; T3), second measuring means (4; 4a, 4b, 4c) for measuring the current (I2; I2a, I2b, I2c) flowing in a secondary winding (2; 32) of the transformer (T; T3), interruption means (6, 14) connected to the primary winding of the transformer to interrupt the electrical power supply of the transformer, and a processing circuit (11, 12, 13; 22, 23, 24) connected to the first and second measuring means, supplying a tripping signal (S) to the interruption means (6, 14) and/or information signals to indicating or monitoring means (15; 25), the processing circuit comprising sampling means (11; 22) connected to the first and second measuring means to sample signals representative of the currents measured in the primary and secondary windings, and pre-processing means (12; 23) connected to the sampling means (11; 22) to supply signals representative of the fundamental component (H1D), of the second harmonic (H2D) and of the fifth harmonic (H5D) of a differential current and a signal (H1R) representative of a through current, a device characterized in that the processing circuit comprises a neural network (13; 24) comprising inputs connected to the pre-processing means and at least one output (S) to supply the tripping and/or information signals, the neural network receiving on its inputs the signals representative of the fundamental component (H1D), of the second harmonic (H2D) and of the fifth harmonic (H5D) of a differential current and the signal (H1R) representative of a through current supplied by the pre-processing means.

2. The protective device according to claim 1 characterized in that the pre-processing means supply to the neural network signals representative :

   - of the ratio (H1D/H1R) between the fundamental component of the differential current and the fundamental component of the through current,
   - of the ratio (H1D/In) between the fundamental component of the differential current and the value of a signal representative of a rated current (In),
   - of the ratio (H2D/H1D) between the second harmonic of the differential current and the fundamental component of the differential current,

3. The protective device according to one of the claims 1 and 2 characterized in that the neural network is of the perceptron type comprising three layers of neurons, four inputs (E1, E2, E3, E4) per current phase to be monitored and a tripping and/or indication signal output (S), the four inputs being connected to a first layer (16) comprising three neurons, the output being connected to a third layer (18) comprising one neuron, a second layer (17) comprising two neurons being connected to the first and third layers.

4. The protective device according to any one of the claims 1 to 3 characterized in that the neurons of the neural network comprise coefficients computed during a learning cycle, the values of the signals applied to the inputs of the neural network being representative of internal fault situations, external fault situations, normal operating situations and transformer power-up situations.

5. The protective device according to any one of the claims 1 to 4 characterized in that the neural network comprises at least one indicating output to indicate the presence of an internal fault between turns of a winding of the transformer, of an internal fault between a turn of a winding and a ground of the transformer and/or of an external fault.

FIG. 1

FIG. 2

**FIG. 3**

**FIG. 4**

**FIG. 5**